# FASCICULE DE BREVET EUROPEEN

(11) **EP 2 760 693 B1**
(45) Date de publication et mention de la délivrance du brevet: **06.11.2019**
(21) Numéro de dépôt: 12773065.3
(22) Date de dépôt: 20.09.2012
(51) Int. Cl.: B60L 50/51, B60W 20/40, B60L 15/20, B60W 10/06, B60L 1/00

(54) **PROCEDE DE FONCTIONNEMENT D'UN SYSTEME MOTOPROPULSEUR D'ENTRAINEMENT D'UN VEHICULE AUTOMOBILE ELECTRIQUE OU HYBRIDE**
VERFAHREN ZUM BETRIEB EINES ANTRIEBSSTRANGES ZUM ANTREIBEN EINES ELEKTRO- ODER HYBRIDFAHRZEUGS
METHOD FOR OPERATING A POWER TRAIN FOR DRIVING AN ELECTRIC OR HYBRID AUTOMOBILE

(30) Priorité: 30.09.2011 FR 1158793
(43) Date de publication de la demande: 06.08.2014
(73) Titulaire: Renault S.A.S., 92100 Boulogne-Billancourt (FR)
(72) Inventeur: CHANTREL, Cédric, F-94220 Charenton le Pont (FR); AGAPIOS, Maria, F-78114 Magny les Hameaux (FR)
(86) Numéro de dépôt international: PCT/FR2012/052095
(87) Numéro de publication internationale: WO 2013/045790

(56) Documents cités:
- DE-A1- 4 409 563
- US-A1- 2002 017 405

## Description

L'invention concerne un procédé de fonctionnement d'un système motopropulseur d'entraînement d'un véhicule automobile électrique ou hybride. Elle concerne aussi un tel système motopropulseur d'entraînement d'un véhicule automobile électrique ou hybride. Elle concerne encore un support de données comprenant des moyens de mise en œuvre d'un tel procédé de fonctionnement. Elle concerne enfin un véhicule automobile électrique comprenant un tel système motopropulseur d'entraînement.

Un grand nombre de fonctions du véhicule sont spécifiques aux véhicules électriques ou hybrides. La fonction démarrage du moteur électrique fait partie de ces spécificités. Par « démarrer le système motopropulseur d'entraînement », on entend « mettre à la disposition de l'utilisateur la motricité du véhicule ».

Pour démarrer un système motopropulseur d'entraînement d'un véhicule électrique ou hybride, soit pour démarrer un véhicule électrique ou hybride, un utilisateur doit maintenir une clef dans une position particulière +DEM pendant plusieurs secondes. De plus, un échec de démarrage durant la séquence de démarrage nécessite systématiquement une nouvelle action de l'utilisateur sur la clef pour démarrer. Ceci est compliqué et contraignant pour l'utilisateur.

On connaît du document KR20090062287 une méthode de démarrage à froid d'un véhicule hybride dans le but d'améliorer les performances au démarrage.

On connaît du document US20090287366 une stratégie d'optimisation du mode roulage d'un véhicule hybride et notamment de la répartition des actions des moteurs électrique et thermique.

On connaît du document US20060169504 un dispositif de transmission permettant de démarrer un véhicule hybride.

On connaît du document EP2039570 un procédé pour détecter le non démarrage d'un moteur électrique et en informer le conducteur.

Le document DE4409563 décrit un procédé permettant d'anticiper une demande de démarrage par clef d'un utilisateur, afin d'accélérer le démarrage du moteur. Pour cela, le procédé de démarrage se déclenche sur réception d'un signal capteur et réception d'un signal indiquant une probabilité forte de demande de démarrage.

Le document US20020017405 divulgue un procédé de gestion de démarrage tenant compte de l'état du service plug d'une batterie de traction électrique. Notamment on démarre malgré l'état ouvert d'un commutateur de service plug quand on détecte deux demandes de démarrage dans un intervalle de temps ni trop court ni trop long et dans le cas où l'état du commutateur viendrait d'un service plug mal remis.

Le but de l'invention est de fournir un procédé de fonctionnement d'un système motopropulseur d'entraînement d'un véhicule automobile électrique ou hybride améliorant les procédés de fonctionnement connus de l'art antérieur. En particulier, l'invention fournit un procédé de fonctionnement présentant une stratégie de démarrage, notamment dynamique, qui optimise le compromis entre disponibilité de la prestation et sécurité, cette stratégie incluant une logique de récupération de la motricité sur un véhicule roulant suite à une coupure intempestive de la motricité.

Selon l'invention, un procédé de démarrage d'un système motopropulseur d'entraînement électrique d'un véhicule automobile électrique ou hybride est tel qu'une action d'un utilisateur sur un organe de commande de démarrage déclenche une temporisation, le démarrage du système motopropulseur étant seulement mis en œuvre si une autorisation de démarrage intervient avant l'échéance de la temporisation. Le système motopropulseur est par exemple un système électrotechnique dans le cas d'un véhicule électrique, ou un système comportant au moins un moteur thermique et un moteur électrique dans le cas d'un véhicule hybride.

La durée de la temporisation est définie automatiquement.

La durée de la temporisation est définie en fonction de l'état du véhicule ou en fonction de l'état dispositif du véhicule ou en fonction d'un événement se produisant au niveau du véhicule. La durée de temporisation est augmentée :
- si la vitesse du véhicule est inférieure à une première vitesse seuil, auquel cas on ignore l'état d'un signal reçu par un calculateur moteur nécessitant une réinitialisation,
- si la vitesse du véhicule est inférieure à une deuxième vitesse seuil et la position du levier de vitesse est différente d'une position « PARK » correspondant à un état de stationnement, auquel cas une notification vocale ou visuelle est jouée à un utilisateur pour lui demander de remettre le levier de vitesse à cette position.

La durée de la temporisation est augmentée si une réinitialisation d'un dispositif du véhicule est nécessaire et/ou si une action du conducteur est nécessaire.

La durée de la temporisation est augmentée si, au moment de la requête de démarrage, la vitesse du véhicule est inférieure à une première vitesse seuil ou si, au moment de la requête de démarrage, on détecte que l'état de la transmission est différent de l'état de stationnement.

L'action de l'utilisateur peut comprendre une action mécanique de l'utilisateur sur une clef de démarrage, notamment un maintien de la clef dans une première position pendant une première durée prédéterminée, ou l'action de l'utilisateur peut comprendre une action mécanique de l'utilisateur sur un bouton de démarrage, notamment un maintien d'un bouton poussoir dans une deuxième position pendant une première durée prédéterminée.

La première durée peut être supérieure ou égale à 30 ms.

La durée de la temporisation peut être comprise entre 0 s et 15 s, en particulier comprise entre 3 s et 10 s, en particulier environ égale à 5 s.

L'autorisation de démarrage peut être donnée lorsqu'un ensemble de conditions sont remplies.

Une des conditions peut comprendre les propositions suivantes :
- Vitesse du véhicule supérieure à une première vitesse seuil, ou
- Vitesse du véhicule inférieure à une deuxième vitesse et organe de commande de transmission en position parking, ou
- Vitesse du véhicule supérieure à une deuxième vitesse et organe de commande de transmission en position neutre, ou
- Une coupure intempestive de la motricité vient d'avoir lieu.

L'invention concerne aussi un support d'enregistrement de données lisible par un calculateur sur lequel est enregistré un programme d'ordinateur comprenant des moyens logiciels de mise en œuvre des étapes du procédé défini précédemment.

Les dessins annexés représentent, à titre d'exemple, un mode d'exécution du procédé de fonctionnement selon l'invention et un mode de réalisation d'un système motopropulseur d'entraînement selon l'invention.
La figure 1 est un schéma d'un système motopropulseur d'entraînement d'un véhicule automobile électrique selon l'invention.
La figure 2 est un diagramme temporel des états de différents signaux intervenant dans une séquence de démarrage d'un système d'entraînement connu de l'art antérieur, le démarrage étant réussi.
La figure 3 est un diagramme temporel des états de différents signaux intervenant dans une séquence de démarrage d'un système d'entraînement connu de l'art antérieur, le démarrage étant raté.
La figure 4 est un diagramme temporel des états de différents signaux intervenant dans une séquence de démarrage d'un système d'entraînement selon l'invention, le démarrage étant réussi.
La figure 5 est un schéma présentant différents dialogues entre différents calculateurs du système d'entraînement selon l'invention.

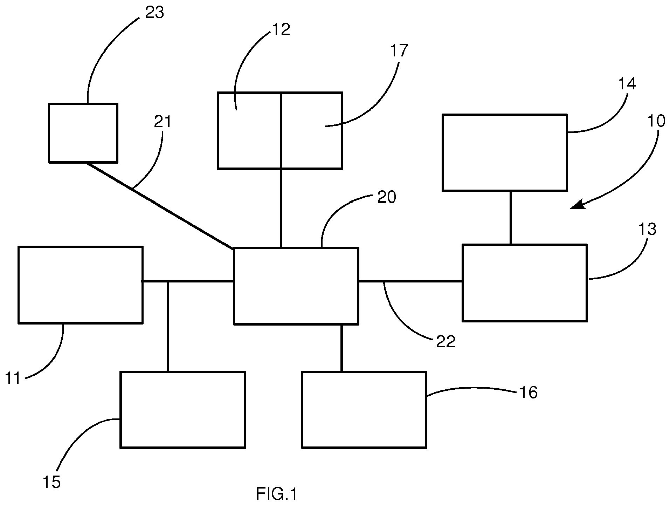

Des éléments d'une chaîne motopropulseur ou système motopropulseur d'entraînement 10 d'un véhicule automobile électrique ou hybride selon l'invention sont représentés à la figure 1. Le système motopropulseur comprend par exemple les éléments ou composants suivants :
- une batterie 11 d'alimentation d'un moteur électrique d'entraînement du véhicule automobile qui permet le stockage de l'énergie électrique nécessaire à l'entraînement ;
- le moteur 14 électrique d'entraînement du véhicule automobile qui permet de transformer l'énergie électrique en énergie mécanique ;
- un dispositif 13 de pilotage du moteur électrique d'entraînement du véhicule automobile comprenant une électronique de puissance ; il se trouve entre la batterie et le moteur ; il s'agit par exemple d'un convertisseur de puissance (onduleur) dont la fonction est de transformer la tension continue de la batterie en tension triphasée à fréquence variable ;
- un chargeur 12 qui permet de charger en énergie la batterie; il comprend par exemple un boîtier comprenant une électronique de puissance permettant de transformer la tension d'une source électrique externe, notamment la tension alternative du réseau électrique commercial domestique, en une tension continue permettant la recharge de la batterie ;
- un convertisseur 15 de tension haute tension - basse tension 400V / 14V nécessaire à l'alimentation de la batterie basse tension alimentant le réseau de bord du véhicule électrique pour les fonctions classiques du véhicule comme l'allumage des feux, la radio, le fonctionnement des essuie-glaces, la condamnation des ouvrants, l'ouverture/fermeture des fenêtres, l'alimentation des systèmes d'assistance de direction ;
- un module 17 permettant la distribution et l'alimentation d'énergie des différents composants et autres consommateurs d'énergie haute tension. Par exemple, le système de chauffage et de climatisation du véhicule pourra être également relié à ce module et être alimenté par le réseau Haute tension du véhicule ;
- un système de refroidissement 16 du système motopropulseur.

Sur un véhicule électrique, un tel système motopropulseur remplace le groupe motopropulseur à combustion connu sur un véhicule classique.

De préférence, chacun des composants du système, hormis le moteur électrique, dispose de son propre calculateur qui a pour fonction la gestion bas niveau et locale du composant auquel il est dédié.

Le système motopropulseur 10 pour la gestion des différentes prestations du système sur le véhicule est géré par un calculateur de supervision 20 du système qui :
- s'interface avec le véhicule pour prendre en compte les désirs du conducteur. Il fait donc notamment l'acquisition de la position de l'organe de commande d'accélérateur, l'acquisition de la position de l'organe de commande de frein, l'acquisition de la position de l'organe de commande de transmission (par exemple la position du levier de vitesse), l'acquisition de la position de l'organe de commande de démarrage (par exemple la position du bouton poussoir de démarrage ou la position de la clef de démarrage) ;
- pilote les composants du système 10 ; l'ensemble des flux d'informations sont échangés entre les composants et le calculateur de supervision 20 qui distribue les ordres aux différents composants.

Sur la figure 1, les liaisons entre les différents calculateurs des composants du système motopropulseur d'entraînement sont représentées de manière simplifiée. Le calculateur de supervision 20 est par exemple un calculateur maître. Il est relié aux calculateurs des composants du système motopropulseur d'entraînement par un réseau électrique 21 (CAN-ETS), par exemple un réseau informatique, notamment un réseau de type CAN (Controller Area Network) ; ce réseau permet aux calculateurs d'échanger un grand nombre d'informations nécessaires au fonctionnement du système.

De l'autre côté, le calculateur de supervision 20 est relié aux autres calculateurs (calculateurs esclaves) du reste du véhicule automobile, notamment un calculateur 23, par un autre réseau électrique 21, par exemple un réseau informatique, notamment un réseau de type CAN.

Le système motopropulseur d'entraînement et le calculateur de supervision sont susceptibles de se trouver dans différents modes de fonctionnement, par exemple :

| | |
|---|---|
| Sleep : | Le calculateur de supervision 20 est endormi. Aucune prestation n'est accessible. Ce mode correspond à un état de consommation réduite. |
| WakeUp : | Le calculateur de supervision se réveille. Aucune prestation n'est accessible. |
| Driving : | Le véhicule peut être entraîné à l'aide du système motopropulseur 10 et les fonctions de confort thermique de l'habitacle sont disponibles. |
| Standby : | Le calculateur de supervision, comme le système motopropulseur d'entraînement, comme le véhicule sont inactifs. Aucune prestation n'est accessible. |

Le système d'entraînement comprend par ailleurs tous les éléments matériels et/ou logiciels nécessaires à la mise en œuvre du procédé de fonctionnement objet de l'invention. Les éléments matériels et/ou logiciels comprennent un organe de commande de démarrage, notamment un contacteur à clef ou un bouton poussoir, un élément de détermination de la position de l'organe de commande de démarrage, un élément de temporisation, un élément déterminant si un ensemble de conditions sont remplies et un élément d'autorisation du démarrage. Les éléments matériels et/ou logiciels peuvent aussi comprendre un organe de commande de transmission, un élément de détermination de la position de l'organe de commande de transmission, un élément de détermination de la vitesse du véhicule, un élément de surveillance de la motricité. Outre l'organe de commande de démarrage et l'organe de commande de transmission, tous les éléments peuvent être contenus dans le calculateur de supervision. Ces éléments ou certains de ces éléments peuvent aussi se trouver en dehors du calculateur.

Les moyens logiciels peuvent comprendre des programmes d'ordinateur.

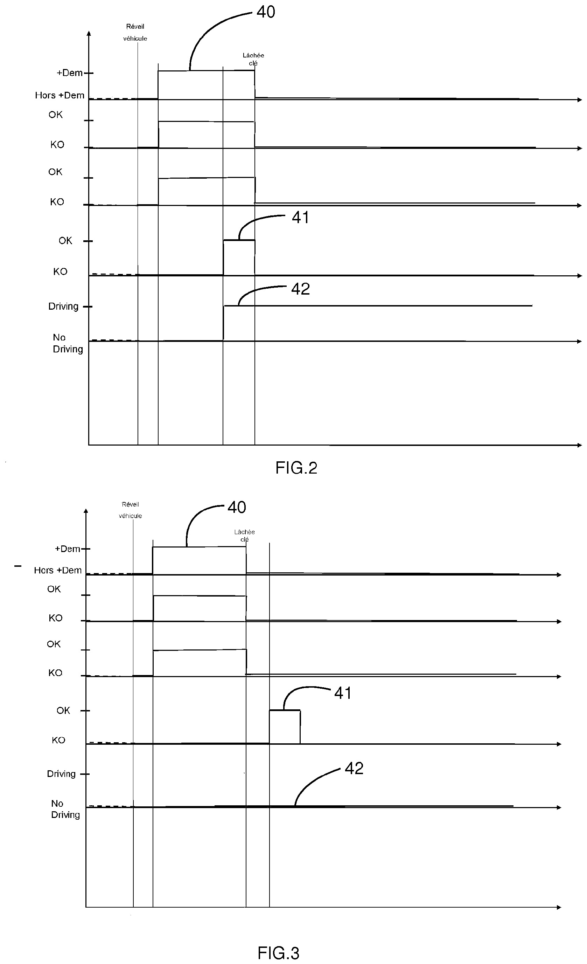

Un procédé de fonctionnement d'un système d'entraînement connu de l'art antérieur est décrit ci-après en référence aux figures 2 et 3.

Le démarrage est demandé par l'utilisateur à travers son action sur l'organe de commande de démarrage, par exemple une action sur une clef de contact dans le cas d'un véhicule à clef. L'action sur la clef est transmise à un calculateur de supervision sous forme d'un signal 40 dont l'état est maintenu tant que l'utilisateur maintient la clef en position +DEM et qu'il n'y a pas d'échec de démarrage provoquant une chute de ce signal.

Dans le cas de la figure 2, on remarque que les conditions de démarrage sont réunies (ce qui est représenté par l'état haut du signal 41) avant la fin de l'action de l'utilisateur sur la clef. Aussi, le système d'entraînement est démarré, ce qui est traduit par l'état haut d'un signal 42.

Dans le cas de la figure 3, on remarque que les conditions de démarrage sont réunies (ce qui est représenté par l'état haut du signal 41) après la fin de l'action de l'utilisateur sur la clef. Aussi, le système d'entraînement n'est pas démarré, ce qui est traduit par un maintien du signal 42 à l'état bas.

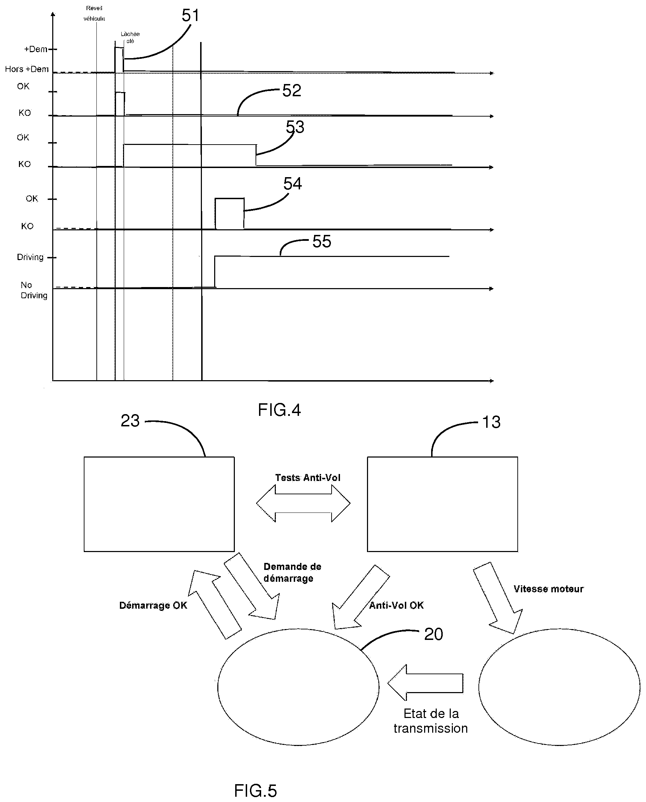

Un mode d'exécution du procédé de fonctionnement selon l'invention est décrit ci-après en référence à la figure 4.

Une action de l'utilisateur sur l'organe de commande de démarrage provoque l'ouverture d'une fenêtre temporelle de démarrage définit par une temporisation. Cette fenêtre temporelle peut se terminer prématurément en cas de perte de communication entre un calculateur, notamment le calculateur 23 d'habitacle recueillant les requêtes et volontés de l'utilisateur, et le calculateur de supervision ou en cas de demande d'arrêt de la séquence de démarrage formulée par l'utilisateur.

Ainsi, l'utilisateur ne doit pas maintenir l'organe de commande de démarrage dans une position particulière jusqu'au démarrage effective du système motopropulseur d'entraînement, en particulier l'utilisateur ne doit pas maintenir la clef en position +DEM. Si les conditions de démarrage du système sont réunies avant l'échéance de cette fenêtre temporelle, alors le démarrage du système motopropulseur d'entraînement ou le démarrage du véhicule est mis en œuvre, le démarrage comprend l'activation d'une séquence de démarrage du système qui est décrite plus bas.

Le procédé permet donc d'améliorer l'ergonomie de démarrage du système pour l'utilisateur en définissant une fenêtre temporelle de démarrage indépendante du maintien en position particulière de l'organe de commande de démarrage. La durée de la fenêtre peut varier en fonction du contexte de démarrage et/ou d'informations reçues par le calculateur de supervision pendant l'action de l'utilisateur sur l'organe de commande de démarrage ou pendant une phase précédant l'action de l'utilisateur sur l'organe de commande de démarrage.

Par exemple :
- Au moment de la requête de démarrage, si la vitesse du véhicule VE est inférieure à une première vitesse seuil V0+ (c'est-à-dire s'il est nécessaire de réinitialiser un calculateur moteur), la durée de la fenêtre temporelle est automatiquement incrémentée de 2 s (secondes) et on ignore l'état d'un signal reçu par le calculateur de supervision du calculateur moteur.
- Cette incrémentation peut encore être augmentée sur détection de la position du levier de vitesse différente de « PARK », pour laisser le temps à l'utilisateur de remettre le levier sur « PARK » après notification vocale ou visuelle à l'utilisateur lui demandant de mettre le levier à cette position.
- Au moment de la requête de démarrage, si la vitesse du véhicule VE est supérieure à une deuxième vitesse seuil V1 (c'est-à-dire s'il n'est pas nécessaire de réinitialiser le calculateur moteur), la durée de la fenêtre temporelle de démarrage n'est pas incrémentée. On peut mettre fin prématurément à cette fenêtre sur réception d'un message traduisant une action explicite de l'utilisateur pour arrêter le système ou des conditions de sécurité non vérifiées.

La figure 4 présente un exemple de séquence de démarrage réussie dans laquelle le procédé selon l'invention est mis en œuvre. Les conditions sécuritaires permettant le démarrage du véhicule restent présentes et entièrement gérées par le calculateur de supervision. Sur le chronogramme de la figure 4, on identifie l'action de l'utilisateur traduite par un passage d'un signal 51 à l'état haut. Ceci se traduit par un signal 52 à l'état haut au niveau du calculateur 23 tant que le signal 51 est à l'état haut. Dès que l'organe a été maintenu suffisamment longtemps dans la position de commande de démarrage (par exemple plus de 30 ms), une temporisation (représentée par un signal 53) est déclenchée, par exemple au niveau du calculateur de supervision. Parallèlement, on vérifie que toutes les conditions de démarrage sont réunies. Lorsque toutes les conditions de démarrage sont effectivement réunies, un signal 54 passe à l'état haut. Ce passage à l'état haut du signal 54 traduit une autorisation de démarrage du système motopropulseur d'entraînement et donc du véhicule. En conséquence, le système motopropulseur bascule (comme traduit par un signal 55 à l'état haut) dans le mode « driving » évoqué précédemment. C'est dans ce mode « driving » qu'est ensuite mise en œuvre une séquence de démarrage du système motopropulseur du véhicule comme décrit plus bas.

Autrement dit, une action de l'utilisateur sur un organe de commande de démarrage déclenche une temporisation, le démarrage du système motopropulseur étant seulement mis en œuvre si une autorisation de démarrage intervient avant l'échéance de la temporisation. Cette temporisation a par exemple une durée prédéfinie, par exemple comprise entre 0 et 15 s. Cette durée peut aussi être définie avant l'action de l'utilisateur sur l'organe de commande de démarrage ou lors de l'action de l'utilisateur sur l'organe de commande de démarrage. Cette définition peut dépendre de l'état du système motopropulseur d'entraînement et/ou de l'état du véhicule lors de cette action.

Suite à l'autorisation de démarrage, une séquence de démarrage du système (décrite plus bas) est mise en œuvre.

L'autorisation de démarrage est donnée lorsqu'un ensemble de conditions sont remplies.

La gestion du démarrage fait intervenir un grand nombre d'organes ou de calculateurs. La figure 5 présente une vue haut niveau des organes impliqués dans la fonction de démarrage du système motopropulseur. Les problèmes de démarrage rencontrés avant mise en œuvre du procédé selon l'invention sur les véhicules étaient liés à la mise en œuvre obligatoire d'une réinitialisation du calculateur du moteur électrique. Cette réinitialisation obligatoire pendant la phase de démarrage rend indisponible certaines informations, ce qui conduit à des échecs de démarrage car le calculateur de supervision ne reçoit pas de réponse du calculateur 13 du moteur électrique à temps.

Pour résoudre ce problème, il a été imaginé d' :
1) Anticiper la demande de démarrage pour provoquer une réinitialisation avant la demande réelle de démarrage de la part de l'utilisateur. Cette solution ne peut pas être mise en œuvre en raison de la définition technique du calculateur du moteur électrique (liaison filaire entre l'information clef et le calculateur).
2) Inhiber la prise en compte des conditions de démarrage impactées par la réinitialisation. Cette solution implique une gestion partielle des conditions sécuritaires autorisant le démarrage.

Ces deux solutions posent donc de sérieux problèmes.

La séquence de démarrage sur un véhicule est soumise à un certain nombre d'actions ainsi qu'à des contraintes de façon à sécuriser la mise à disposition de la motricité. Ces actions et contraintes, dépendent de l'état initial du véhicule et notamment de la vitesse du véhicule au moment du démarrage.

Certaines contraintes de démarrage sont communes aux véhicules thermiques, comme par exemple :
- l'obligation de deux actions combinées de l'utilisateur pour permettre le décollage ou la mise en mouvement du véhicule,
- les sécurisations liées à la position du levier de vitesse sur les véhicules à transmission automatique,
- le succès de l'authentification de la clef ou mise en œuvre de la fonction « anti-démarrage » ou « anti-vol » du véhicule.

Nous n'abordons que très brièvement dans ce document les contraintes et actions génériques liées au démarrage de tout véhicule (thermique ou électrique). Nous nous attachons plutôt aux spécificités du véhicule électrique. Notamment nous n'abordons pas la mise en œuvre de la fonction « anti-démarrage » ou « antivol » qui est une fonction classique sur tout véhicule. Aussi, il faut savoir que le démarrage et le roulage du véhicule ne sont autorisés que si et seulement si la procédure d'authentification s'est déroulée avec succès. Nous considérons dans la suite du document que cette fonction a été réalisée avec succès sur le véhicule.

Tout démarrage de système d'entraînement ou de véhicule est assujetti aux vérifications de bon fonctionnement du système afin de permettre la mise à disposition de la motricité en toute sécurité. Sur un véhicule électrique, il s'agit notamment de vérifier la condition suivante :
en fonction de la vitesse du véhicule au moment de la demande de démarrage par l'utilisateur, les contraintes liées au levier de vitesse pour un véhicule à transmission automatique seront différentes :
Il s'ensuit qu'une condition de démarrage en liaison avec la transmission et nécessaire à l'autorisation de démarrage peut être formulée comme suit :
Obligation d'être en position PARK si le véhicule a une vitesse inférieure ou égale à V0 ;
   OU
Démarrage autorisé en position NEUTRE si la vitesse véhicule est supérieure à V0 ;
   OU
Démarrage autorisé indépendamment de la position de levier pendant un temps T0 qui suit une coupure intempestive de la motricité ;
   OU
Démarrage autorisé tant que la vitesse est supérieure à V1.

### Remarques :

Les seuils de vitesse V0 et V1 devront être calibrés de façon à pouvoir identifier en toutes circonstances l'état dynamique du véhicule (arrêté ou roulant). Ce sont des seuils basse vitesse dont l'ordre de grandeur peut être compris entre 1 et 5 km/h pour V0 et 5 à 10 km/h pour V1. L'information de vitesse peut être obtenue par exemple grâce aux mesures directes de la vitesse des roues ; elle peut également être consolidée par calcul grâce à la mesure de la vitesse de rotation du moteur électrique. Le temps T0 doit également être calibré lors de la mise au point du véhicule. L'ordre de grandeur de ce temps T0 est compris entre 0 et 15 secondes.

Une fois remplies les conditions d'autorisation de démarrage suite à une demande explicite de l'utilisateur, une séquence de démarrage du système motopropulseur du véhicule est mise en œuvre.

L'autorisation de la motricité est assujettie à la mise à disposition de la puissance délivrée par la batterie et à la connexion des contacteurs de puissance de la batterie. Le moteur électrique est quant à lui piloté à travers un onduleur dont la fonction est de transformer la tension continue délivrée par la batterie en tension triphasée à fréquence variable consommée par le moteur électrique. Par ailleurs, le réseau de bord du véhicule et les calculateurs de bord sont alimentés en 12V par la batterie 12V du véhicule. Cependant, il n'y a pas d'alternateur pour charger la batterie 12V, aussi cette fonction est assurée grâce au convertisseur continu-continu 400V-14V qui doit être activé avant le démarrage du véhicule.

La séquence de démarrage consiste donc à :
a) connecter les contacteurs de puissance de la batterie,
b) activer le convertisseur continu-continu pour permettre la recharge de la batterie 12V du véhicule,
c) activer l'onduleur qui pilote le moteur électrique.

La séquence de connexion des relais de puissance doit être impérativement réalisée avec une phase de précharge, de façon à ne pas courir le risque de détériorer les relais et de créer des arcs électriques. Autrement dit, quelque soit l'origine d'ouverture d'un relais, il ne doit pas être refermé sans précharge car il y a un fort risque de collage du relais. En outre, les consommateurs de puissance de la batterie. que sont le convertisseur continu-continu et l'onduleur, ne doivent être activés que lorsque les relais de puissance sont connectés de façon à ce qu'ils n'appellent pas de puissance tant que la connexion des relais n'est pas correctement établie.

L'invention permet d'éviter à l'utilisateur de maintenir de manière prolongée un organe de commande de démarrage dans une position particulière, par exemple une clef en position +DEM, en attendant que les conditions de démarrage soient remplies. Pour couvrir d'éventuelles perturbations de compatibilité électromagnétique sur le réseau, l'utilisateur doit maintenir cette position pendant au moins 30 ms. Le signal traduisant cette position est filtrée à 30ms, ce qui retarde d'autant le début de la séquence de démarrage. Un tel retard est largement acceptable.

Le procédé de fonctionnement et le système selon l'invention présentent de nombreux avantages :
- ils permettent à l'utilisateur de ne donner qu'une impulsion sur l'organe de commande de démarrage pour commander le démarrage. Ainsi, il est évité que l'utilisateur maintienne trop longtemps l'organe de commande de démarrage en position +DEM pour démarrer le véhicule et les échecs de démarrage nécessitant une nouvelle action de l'utilisateur sont évités,
- ils permettent de limiter les échecs de démarrage,
- ils permettent d'assurer le démarrage du véhicule en toute sécurité pour l'utilisateur et le système, en fonction des états fonctionnels du système, des défauts rencontrés et des contraintes liées au démarrage,
- ils permettent de gérer de façon globale et optimisée la séquence de démarrage d'un véhicule électrique ou hybride même en roulant,
- ils permettent de gérer toutes les causes de refus de démarrage et d'informer l'utilisateur,
- ils permettent de fournir une solution fonctionnelle et modulaire qui peut donc aisément être appliqué à toute architecture électronique/électrique et à toute technologie de véhicule électrique ou hybride,
- ils permettent d'optimiser le compromis disponibilité / sécurité sur le véhicule électrique ou hybride.

## Revendications

1. Procédé de démarrage d'un système motopropulseur (10) d'entraînement électrique d'un véhicule automobile électrique ou hybride, dans lequel une action d'un utilisateur sur un organe de commande de démarrage déclenche une temporisation, le démarrage du système motopropulseur étant seulement mis en œuvre si une autorisation de démarrage intervient avant l'échéance de la temporisation, **caractérisé en ce que** ladite durée de temporisation définie automatiquement est augmentée dans chacun des cas suivants:
- si la vitesse du véhicule est inférieure à une première vitesse seuil (V0+), auquel cas on ignore l'état d'un signal reçu par un calculateur de supervision (20) d'un calculateur moteur nécessitant une réinitialisation,
- si la vitesse du véhicule est inférieure à une deuxième vitesse seuil (V0) et la position du levier de vitesse est différente d'une position « PARK » correspondant à un état de stationnement, auquel cas une notification vocale ou visuelle est jouée à un utilisateur pour lui demander de remettre le levier de vitesse à cette position.

2. Procédé de démarrage selon la revendication 1, **caractérisé en ce que** la durée de la temporisation est définie en fonction de l'état du véhicule ou en fonction de l'état dispositif du véhicule ou en fonction d'un événement se produisant au niveau du véhicule.

3. Procédé de démarrage selon l'une des revendications précédentes, **caractérisé en ce que** l'action de l'utilisateur comprend une action mécanique de l'utilisateur sur une clef de démarrage, notamment un maintien de la clef dans une première position (+DEM) pendant une première durée prédéterminée, ou **en ce que** l'action de l'utilisateur comprend une action mécanique de l'utilisateur sur un bouton de démarrage, notamment un maintien d'un bouton poussoir dans une deuxième position pendant une première durée prédéterminée.

4. Procédé de démarrage selon la revendication précédente, **caractérisé en ce que** la première durée est supérieure ou égale à 30 ms.

5. Procédé de démarrage selon l'une des revendications précédentes, **caractérisé en ce que** la durée de la temporisation est comprise entre 0 s et 15 s, en particulier comprise entre 3 s et 10 s, en particulier environ égale à 5 s.

6. Procédé de démarrage selon l'une des revendications précédentes, **caractérisé en ce que** l'autorisation de démarrage est donnée lorsqu'un ensemble de conditions sont remplies.

7. Procédé de démarrage selon la revendication précédente, **caractérisé en ce qu'**une des conditions comprend les propositions suivantes :
- Vitesse du véhicule supérieure à une première vitesse seuil (V1), ou
- Vitesse du véhicule inférieure à une deuxième vitesse (V0) et organe de commande de transmission en position parking, ou
- Vitesse du véhicule supérieure à une deuxième vitesse (V0) et organe de commande de transmission en position neutre, ou
- Une coupure intempestive de la motricité vient d'avoir lieu.

8. Support d'enregistrement de données lisible par un calculateur sur lequel est enregistré un programme d'ordinateur comprenant des moyens logiciels de mise en œuvre des étapes du procédé selon l'une des revendications précédentes.

## Patentansprüche

1. Startverfahren eines Antriebsstrangsystems (10) für den elektrischen Antrieb eines Elektro- oder Hybrid-Kraftfahrzeugs, wobei eine Einwirkung eines Benutzers auf ein Startsteuerorgan eine Verzögerung auslöst, wobei der Start des Antriebsstrangsystems nur durchgeführt wird, wenn eine Starterlaubnis vor dem Ablauf der Verzögerung eintritt, **dadurch gekennzeichnet, dass** die automatisch definierte Verzögerungsdauer in jedem der folgenden Fälle erhöht wird:
- wenn die Geschwindigkeit des Fahrzeugs niedriger als eine erste Schwellengeschwindigkeit (V0+) ist, in welchem Fall der Zustand eines Signals ignoriert wird, das von einem Überwachungsrechner (20) eines Motorsteuergeräts empfangen wird, das eine Rückstellung erfordert,
- wenn die Geschwindigkeit des Fahrzeugs niedriger als eine zweite Schwellengeschwindigkeit (V0) ist und die Stellung des Gangschalthebels sich von einer "PARK"-Stellung unterscheidet, die einem Parkzustand entspricht, in welchem Fall eine akustische oder visuelle Benachrichtigung einem Benutzer vorgespielt wird, um ihn aufzufordern, den Gangschalthebel in diese Stellung zurückzubringen.

2. Startverfahren nach Anspruch 1, **dadurch gekennzeichnet, dass** die Dauer der Verzögerung abhängig vom Zustand des Fahrzeugs oder abhängig vom Zustand einer Vorrichtung des Fahrzeugs oder abhängig von einem Ereignis definiert wird, das im Bereich des Fahrzeugs auftritt.

3. Startverfahren nach einem der vorhergehenden Ansprüche, **dadurch gekennzeichnet, dass** die Einwirkung des Benutzers eine mechanische Einwirkung des Benutzers auf einen Zündschlüssel enthält, insbesondere einen Halt des Schlüssels in einer ersten Stellung (+DEM) während einer ersten vorbestimmten Dauer, oder dass die Einwirkung des Benutzers eine mechanische Einwirkung des Benutzers auf einen Startknopf enthält, insbesondere einen Halt eines Druckknopfs in einer zweiten Stellung während einer ersten vorbestimmten Dauer.

4. Startverfahren nach dem vorhergehenden Anspruch, **dadurch gekennzeichnet, dass** die erste Dauer länger als oder gleich 30 ms ist.

5. Startverfahren nach einem der vorhergehenden Ansprüche, **dadurch gekennzeichnet, dass** die Dauer der Verzögerung zwischen 0 s und 15 s, insbesondere zwischen 3 s und 10 s liegt, insbesondere gleich 5 s ist.

6. Startverfahren nach einem der vorhergehenden Ansprüche, **dadurch gekennzeichnet, dass** die Starterlaubnis erteilt wird, wenn eine Gruppe von Bedingungen erfüllt ist.

7. Startverfahren nach dem vorhergehenden Anspruch, **dadurch gekennzeichnet, dass** eine der Bedingungen die folgenden Vorschläge enthält:
- Geschwindigkeit des Fahrzeugs höher als eine erste Schwellengeschwindigkeit (V1), oder
- Geschwindigkeit des Fahrzeugs niedriger als eine zweite Geschwindigkeit (V0) und Getriebesteuerorgan in der Park-Stellung, oder
- Geschwindigkeit des Fahrzeugs höher als eine zweite Geschwindigkeit (V0) und Getriebesteuerorgan in der Neutralstellung, oder
- ein ungewolltes Abschalten der Antriebskraft hat stattgefunden.

8. Datenaufzeichnungsträger, der von einem Rechner lesbar ist, auf dem ein Computerprogramm aufgezeichnet ist, das Softwareeinrichtungen zur Durchführung der Schritte des Verfahrens nach einem der vorhergehenden Ansprüche enthält.

## Claims

1. Method for starting an electric drivetrain system (10) for driving an electric or hybrid motor vehicle, wherein an action of a user on a starting control element triggers a timeout, the starting of the drivetrain system being implemented only if an authorization to start occurs before the timeout expires, **characterized in that** said automatically defined timeout duration is increased in each of the following cases:
- if the speed of the vehicle is lower than a first threshold speed (V0+), in which case the state of a signal, received by a supervision computer (20) from an engine computer requiring reinitialization, is ignored,
- if the speed of the vehicle is lower than a second threshold speed (V0) and the position of the gear lever is other than a "PARK" position corresponding to a parked state, in which case a voice or visual notification is played to a user so as to ask him to put the gear lever back into this position.

2. Starting method according to Claim 1, **characterized in that** the duration of the timeout is defined depending on the state of the vehicle or depending on the device state of the vehicle or depending on an event occurring in the vehicle.

3. Starting method according to either of the preceding claims, **characterized in that** the action of the user comprises a mechanical action of the user on a starting key, in particular holding the key in a first position (+DEM) for a first predetermined duration, or **in that** the action of the user comprises a mechanical action of the user on a starting button, in particular holding a pushbutton in a second position for a first predetermined duration.

4. Starting method according to the preceding claim, **characterized in that** the first duration is greater than or equal to 30 ms.

5. Starting method according to one of the preceding claims, **characterized in that** the duration of the timeout is between 0 s and 15 s, in particular between 3 s and 10 s, in particular approximately equal to 5 s.

6. Starting method according to one of the preceding claims, **characterized in that** the authorization to start is given when a set of conditions is met.

7. Starting method according to the preceding claim, **characterized in that** one of the conditions comprises the following propositions:
- speed of the vehicle greater than a first threshold speed (V1), or
- speed of the vehicle lower than a second speed (V0) and transmission control element in the parking position, or
- speed of the vehicle greater than a second speed (V0) and transmission control element in the neutral position, or
- an undesired outage of drivability has just occurred.

8. Computer-readable data recording medium on which there is recorded a computer program comprising software means for implementing the steps of the method according to one of the preceding claims.
